# EUROPEAN PATENT SPECIFICATION

(11) **EP 2 759 691 B1**
(45) Date of publication and mention of the grant of the patent: **12.10.2016**
(21) Application number: 12833845.6
(22) Date of filing: 20.08.2012
(51) Int. Cl.: F02D 19/06, F02M 26/28, F02M 25/10, F02B 47/10, C10G 45/44, C07C 5/10, C07C 5/367, C07C 13/18, C07C 15/06, F02M 25/12, F02D 19/08

(54) **POWER CONVERSION SYSTEM**
LEISTUNGSWANDLUNGSSYSTEM
SYSTÈME DE CONVERSION DE PUISSANCE

(30) Priority: 22.09.2011 JP 2011207430
(43) Date of publication of application: 30.07.2014
(73) Proprietor: Hitachi, Ltd., Tokyo 100-8280 (JP)
(72) Inventor: SHIMADA Atsushi, Chiyoda-ku, Tokyo 100-8280 (JP); ISHIKAWA Takao, Chiyoda-ku, Tokyo 100-8280 (JP)
(74) Representative: Beetz & Partner mbB
(86) International application number: PCT/JP2012/070974
(87) International publication number: WO 2013/042499

(56) References cited:
- EP-A2- 1 798 407
- WO-A1-2010/092684
- WO-A1-2011/152365
- WO-A1-2011/152365
- JP-A- H0 261 314
- JP-A- H0 633 839
- JP-A- H0 633 839
- JP-A- 2004 189 585
- JP-A- 2010 083 687
- JP-A- 2010 083 687
- US-A1- 2006 204 799

## Description

### Technical Field

The present invention relates to a power conversion system for reserving natural energy by a hydrogenation reaction of an aromatic hydrocarbon, in which a compression ignition-type internal-combustion engine is used as a heat source in the hydrogenation reaction.

### Background Art

An organic hydride can be used in an energy reservation technique for reserving natural energy and balancing supply and demand of the electric power. The organic hydride which is a hydride of an aromatic hydrocarbon can desorbably store hydrogen by adding hydrogen to carbon-carbon double bonds in the aromatic hydrocarbon. Accordingly, for example, hydrogen generated via water electrolysis using electric power acquired from natural energy can be stored in an organic hydride.

The above hydrogenation reaction of an aromatic hydrocarbon and the dehydrogenation reaction of an organic hydride proceed by being heated in the presence of a predetermined catalyst. For example, exhaust heat from an internal-combustion engine may be used as a heat source for promoting the above reactions.

Among internal-combustion engines, a diesel engine, which is a compression ignition-type internal-combustion engine, is used in a wide range of applications, including a stationary type such as a power generator and mobile typed such as an automobile, a ship, and the like. In addition, a diesel engine has an advantage that operational costs thereof are lower than operational costs of other internal-combustion engines.

However, since diffusion combustion occurs in a diesel engine, exhaust gas thereof contains soot and NOₓ. Therefore, recently, lowering of gas emission has been investigated. Nevertheless, the lowering of gas emission causes other problems such as increase in the equipment size and system costs, and decrease in the thermal efficiency.

Conventionally, a diesel engine system configured to reduce NOₓ in the exhaust gas has been disclosed. The disclosed diesel engine system is provided with a mixer and an exhaust-gas tank. Herein, the mixer mixes in advance fuel and oxygen which are to be fed to a diesel engine, and the exhaust-gas tank reserves exhaust gas for recirculation of the exhaust gas to the diesel engine. (See, for example, Patent Document 1.)

In the above diesel engine system, the oxidizing gas for burning fuel does not contain nitrogen, in contrast to a common diesel engine in which air is used as oxidizing gas. Therefore, the above diesel engine system has an advantage that the exhaust gas does not contain NOₓ.

### Prior Art Documents

### Patent Document

Patent Document 1: Japanese Patent Laid-Open No. H06-33839
Patent Document 2: JP 2010 083687 A

### Summary of Invention

### Technical Problems to Be Solved by the Invention

However, in the conventional diesel engine system (refer to Patent Document 1), the recirculated exhaust gas is fed to the diesel engine through the exhaust-gas tank and the mixer, whereby the combustion temperature of the fuel is lowered. As a result, the amount of soot may increase in the exhaust gas of the above diesel engine system.

In view of above, an object of the present invention is to provide a power conversion system which allows reservation of hydrogen and use of the reserved hydrogen to be realized by use of an organic hydride at low operational costs, and an environmental load given during the operation of the power conversion system to be reduced.

### Means to Solve the Problems

In order to accomplish the above object, a power conversion system according to the present invention is provided. The power conversion system includes: a reactor in which hydrogen and an aromatic hydrocarbon are chemically bound under a heating condition; a decomposer which decomposes a product prepared via chemical binding between hydrogen and the aromatic hydrocarbon into hydrogen and the aromatic hydrocarbon again under a heating condition; and a compression ignition-type internal-combustion engine which feeds exhaust gas as a heat source of heating to the reactor and the decomposer.

Herein, the compression ignition-type internal-combustion engine includes: a first valve arranged in a flow path for feeding air; a second valve arranged in a flow path for feeding oxygen; a third valve arranged in a flow path for feeding hydrogen; a fourth valve arranged in a flow path for feeding recirculated exhaust gas; and a fifth valve arranged in a flow path for feeding coolant which cools the recirculated exhaust gas fed to the compression ignition-type internal-combustion engine by heat exchange therebetween.

### Effect of the Invention

According to the present invention, provided is a power conversion system which allows reservation of hydrogen and use of the reserved hydrogen to be realized by use of an organic hydride at low operational costs, and an environmental load given during operation of the power conversion system to be reduced.

### Brief Description of Drawings

FIG. 1 is a diagram illustrating a construction of a power conversion system according to an embodiment of the present invention.
FIG. 2A is a cross-sectional view of a reactor in the power conversion system according to the embodiment of the present invention
FIG. 2B is a cross-sectional view of a reaction cell built in the reactor.
FIG. 2C is a cross-sectional view of a reaction sheet built in the reaction cell.
FIG. 3 is a flowchart for explaining the operations of the power conversion system according to an embodiment of the present invention, and indicates a procedure executed by a control device of the power conversion system when the power conversion system performs operations for storing an organic hydride.
FIG. 4 is a flowchart for explaining the operations of the power conversion system according to an embodiment of the present invention, and indicates a procedure executed by the control device of the power conversion system when the power conversion system uses hydrogen as a part of fuel obtained by decomposition of an organic hydride.
FIG. 5 is a graph indicating a gas composition rate in a cylinder of an engine when oxygen is fed to the cylinder during the operation of the power conversion system storing the organic hydride.
FIG. 6 is a graphic diagram illustrating combustion regions of the power conversion system according to an embodiment of the present invention during the operation of the power conversion system storing an organic hydride, in comparison with the combustion region of a conventional diesel engine.
FIG. 7 is a graphic diagram indicating a gas composition rate in a cylinder of an engine when hydrogen is fed to the cylinder during the operation of the power conversion system using hydrogen as a part of fuel obtained by decomposition of an organic hydride.
FIG. 8 is a graphic diagram illustrating combustion regions of the power conversion system according to an embodiment of the present invention during the operation of the power conversion system using hydrogen as a part of fuel obtained by decomposition of an organic hydride, in comparison with the combustion region of a conventional diesel engine.

### Mode for Carrying Out the Invention

Hereinbelow, an embodiment of the present invention is explained in detail with reference to accompanying drawings where necessary.

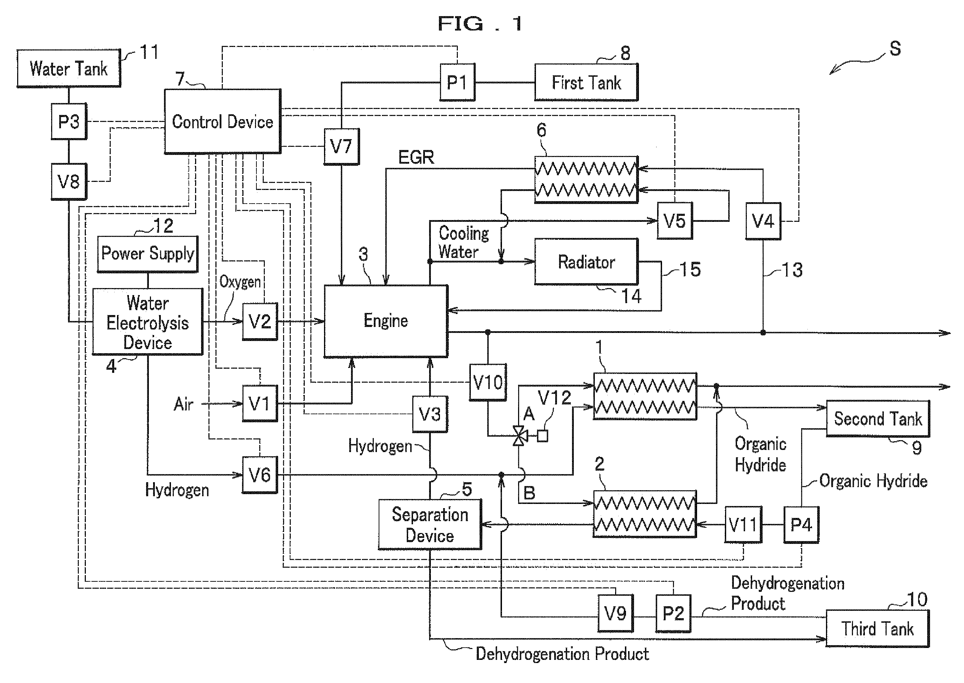

As illustrated in FIG. 1, the power conversion system S according to an embodiment of the present invention is provided with a reactor 1, a hydrogen generator 2, and a diesel engine 3. The reactor 1 produces an organic hydride via chemical binding between hydrogen and an aromatic hydrocarbon under a heating condition. The hydrogen generator 2 working as a decomposer decomposes the organic hydride into hydrogen and the aromatic hydrocarbon again. The diesel engine 3 working as a compression ignition-type internal-combustion engine feeds exhaust gas as a heat source for heating to the reactor 1 and the hydrogen generator 2. (Hereinafter, the diesel engine 3 is simply referred to as the "engine 3".)

The power conversion system S is further provided with a water electrolysis device 4, a separator 5, a heat exchanger 6, and a control device 7. The water electrolysis device 4 performs electrolysis of water. The separator 5 separates at least hydrogen from a mixture of hydrogen and the aromatic hydrocarbon. The heat exchanger 6 cools recirculated exhaust gas which is to be fed to the engine 3, by heat exchange with engine-cooling water. (The recirculated exhaust gas may be referred to as EGR (Exhaust Gas Recirculation) gas.) The control device 7 controls the power conversion system S in accordance with a procedure explained hereinafter.

The power conversion system S uses the heat of the exhaust gas of the engine 3, in the operations for storing hydrogen in an organic hydride and separating hydrogen from the organic hydride. In other words, the power conversion system S uses the heat of the exhaust gas of the engine 3 for storing energy in the organic hydride and subsequently regenerating the stored energy via hydrogen.

Here, an organic hydride is a hydride of an aromatic hydrocarbon, and desorbably stores hydrogen by hydrogenating carbon-carbon double bonds in the aromatic hydrocarbon.

The organic hydride may include, for example, a hydrogenated monocyclic aromatic such as cyclohexane, methylcyclohexane, and dimethylcyclohexane; a hydrogenated bicyclic aromatic such as tetralin, decalin, and methyldecalin, and a hydrogenated tricyclic aromatic such as tetradecahydroanthracene. When the organic hydride is heated in the presence of a predetermined catalyst, the organic hydride is to be decomposed into hydrogen and the aromatic hydrocarbon which is a dehydrogenated product of the organic hydride. The dehydrogenated product of the organic hydride may include, for example, benzene, toluene, xylene, mesitylene, naphthalene, methylnaphthalene, anthracene, and the like.

Next, the organic hydride will be further explained below in detail by exemplifying methylcyclohexane [C₆H₁₁(CH₃)].

Methylcyclohexane is decomposed into hydrogen (H₂) and toluene [C₆H₅(CH₃)] which is an aromatic hydrocarbon as indicated in the formula (1).

C₆H₁₁(CH₃) → C₆H₅(CH₃) + 3H₂ (1)

Conversely, methylcyclohexane is generated as an organic hydride by a reaction between hydrogen (H₂) and toluene [C₆H₅(CH₃)] as indicated in the formula (2).

C₆H₅(CH₃) + 3H₂ → C₆H₁₁(CH₃) (2)

As indicated above, an organic hydride is generated in the reactor 1 by hydrogenating an aromatic hydrocarbon under conditions of heating and the presence of a predetermined catalyst. Then, hydrogen is generated in the hydrogen generator 2 by heating the organic hydride in the presence of a predetermined catalyst so as to decompose the organic hydride.

The power conversion system S according to the present embodiment has both of a structure configured by the reactor 1 for reserving an organic hydride and a structure configured by the hydrogen generator 2 for decomposing the organic hydride. (Hereinafter, the former structure may be referred to as a reservation structure, and the latter structure may be referred to as a decomposition structure.)

First, the structure for reserving an organic hydride by use of the reactor 1 (or energy reservation structure) will be explained below.

The structure for reserving the organic hydride according to the present embodiment includes the reactor 1, the water electrolysis device 4 working as a means for feeding hydrogen to the reactor 1, and a third tank 10 working as a means for feeding an aromatic hydrocarbon (or a dehydrogenated product of the organic hydride).

As explained before, the reactor 1 is configured to form chemical binding between hydrogen and an aromatic hydrocarbon so as to produce an organic hydride by heating hydrogen and the aromatic hydrocarbon in the presence of a predetermined catalyst. In the reactor 1, flow paths through which a mixture of hydrogen and the aromatic hydrocarbon flows are formed, and a catalyst is arranged to face the flow paths. Further, the exhaust gas of the engine 3 explained hereinafter is introduced into the reactor 1 of the present invention so as to heat the above mixture.

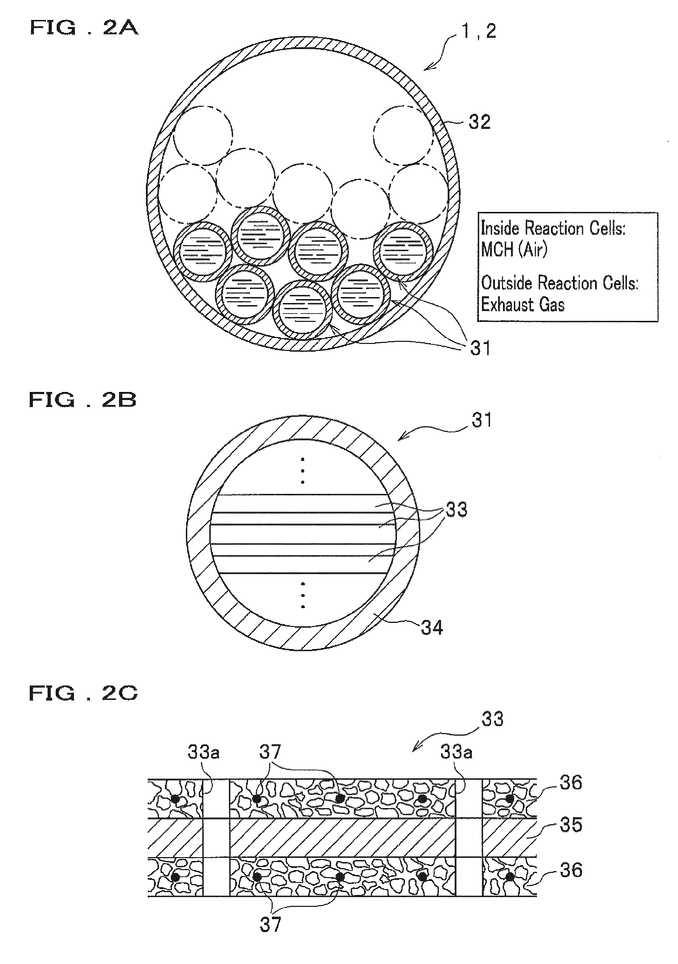

FIG. 2A next referred to is a cross-sectional view of the reactor. FIG. 2B is a cross-sectional view of a reaction cell built in the reactor. FIG. 2C is a cross-sectional view of a reaction sheet built in the reaction cell.

As illustrated in FIG. 2A, the reactor 1 is provided with a plurality of reaction cells 31 and a first casing 32. The reaction cells 31 have cylindrical shapes, and the first casing 32 has a cylindrical shape and houses the reaction cells 31. Further, the dehydrogenated product (for example, toluene) reserved in the third tank 10 illustrated in FIG. 1 is fed to the respective reaction cells 31 through a pump P2 and a valve V9, and hydrogen generated by the water electrolysis device 4 is fed to the respective reaction cells 31 through a valve V6.

Herein, the exhaust gas having a high temperature from the engine 3 flows through the gaps formed between the reaction cells 31.

The first casing 32 and a second casing 34 explained hereinafter are made of metal (e.g., SUS) in order to heighten the thermal conductivity. Note the shapes of the first casing 32 and the second casing 34 are not limited to the cylindrical shape, and may have, for example, a rectangular or polygonal column shape.

As illustrated in FIG. 2B, each reaction cell 31 is provided with a plurality of layered reaction sheets 33 and the second casing 34 housing the plurality of reaction sheets 33.

As illustrated in FIG. 2C, each reaction sheet 33 is formed by metal foil 35 as a base, porous layers 36 formed on both sides of the metal foil 35, and catalysts 37 supported on the porous layers 36. That is, each reaction sheet 33 has a three-layer structure in which one of the porous layers 36 supporting the catalyst 37, the metal foil 35, and the other of the porous layers 36 supporting the catalyst 37 are layered in this order. Further, a gap is formed between each pair of reaction sheets 33 which are adjacent each other in the thickness direction. Those gaps allow hydrogen, the dehydrogenated product, and the organic hydride obtained as a reaction product to flow therethrough.

In addition, since each reaction sheet 33 has a sheet-like shape, the thermal capacity is small and heat is quickly transferred in each reaction sheet 33, so that the temperature of the catalyst 37 quickly rises to a level at which the function of the catalyst 37 is satisfactorily exercised. This allows a product yield of the organic hydride to become high in the reaction between hydrogen and the dehydrogenated product.

Further, a plurality of through-holes 33a are formed in each reaction sheet 33, so that the heat of the exhaust gas from the engine 3 is satisfactorily transferred in the thickness direction. This construction allows the organic hydride, hydrogen, and the dehydrogenated product to satisfactorily pass through each reaction sheet 33.

The metal foil 35 is made of, for example, aluminum foil, and has a thickness of approximately 50 to 200 micrometers. Alternatively, each reaction sheet 33 may include no metal foil 35, and be provided with another porous layer as a base, instead of the metal foil 35. That is, the entire reaction sheet 33 may be formed by a porous structure.

Each porous layer 36 is a layer for supporting the catalyst 37, and has a plurality of pores allowing the organic hydride, hydrogen, and the dehydrogenated product to pass therethrough. The porous layers 36 may be formed of an oxide mainly composed of alumina, titania, silica, zirconia, or the like.

Here, the catalyst 37 produces an organic hydride via a reaction between hydrogen and a dehydrogenated product. Such a catalyst 37 is formed of at least one selected from platinum, nickel, palladium, rhodium, iridium, ruthenium, molybdenum, rhenium, tungsten, vanadium, osmium, chromium, cobalt, and iron or the like.

Note the catalyst 37 used in the reactor 1 is similarly used in the hydrogen generator 2 explained hereinafter. Such a catalyst 37 used in the hydrogen generator 2 functions so as to decompose the organic hydride into hydrogen and the dehydrogenated product.

The exhaust gas after passing through the reactor 1 (illustrated in FIG. 1) passes through a predetermined pipe (not shown) connected to the reactor 1, thereby to be exhausted to the outside of the reactor 1.

In the reactor 1 according to the present embodiment, the temperature in the reactor 1 is assumed to be set at approximately 150°C to 250°C, and the pressure in the reactor 1 is assumed to be set at approximately 0.05 to 0.3 MPa, based on the premise that methylcyclohexane for use is produced by the reaction between hydrogen and toluene as explained hereinbefore. However, the temperature and pressure in the reactor 1 are not limited to the above values, and may be appropriately set within a range corresponding to the organic hydride to be used.

Note in the reactor 1 according to the present embodiment, it is possible to arrange a back-pressure valve in a pipe connecting the reactor 1 with a second tank 9 in order to set the pressure in the above range.

As explained in detail hereinafter, the reactor 1 is heated with the heat of the exhaust gas of the engine 3. Specifically, a flow path for the exhaust gas flowing from the engine 3 through a valve V10 is set toward the direction A by a switching valve V12. Accordingly, the exhaust gas from the engine 3 is introduced into the reactor 1, thereby to heat a mixture of hydrogen and the aromatic hydrocarbon. On the other hand, when the flow path is switched toward the direction B by the switching valve V12, the exhaust gas turns to heating the hydrogen generator 2 as explained hereinafter.

In addition, the opening of the valve V10 is controlled by the control device 7 as explained later, so that a flow rate of the exhaust gas into the reactor 1 is controlled, whereby a temperature of the reactor 1 thus heated is set in the aforementioned range.

The control device 7 controls the output of the pump P3, and the opening of a valve V8. When water reserved in a water container 11 is fed to the water electrolysis device 4 through the pump P3 and the valve V8, the water electrolysis device 4 decomposes the water into hydrogen and oxygen by use of the electric power supplied from a power supply 12. Then, the water electrolysis device 4 feeds the hydrogen obtained by the water electrolysis, to the reactor 1 through a valve V6 (or sixth valve) of which opening is controlled by the control device 7.

Meanwhile, the oxygen obtained by the water electrolysis device 4 is to be fed to the engine 3 as explained in detail later.

The third tank 10 reserves an aromatic hydrocarbon which is a row material of the corresponding organic hydride. The aromatic hydrocarbon is fed from the third tank 10 to the reactor 1 through the pump P2 and the valve V9. The output of the pump P2 and the opening of the valve V9 are controlled by the control device 7. The power conversion system S is configured such that the aromatic hydrocarbon flowing through the pump P2 and the valve V9 join the flow of hydrogen from the water electrolysis device 4 at an upstream side of the reactor 1.

Then, in the reactor 1, the organic hydride produced in the reaction between the hydrogen fed from the water electrolysis device 4 and the aromatic hydrocarbon fed from the third tank 10 is exhausted from the reactor 1 in a gas state, then condensed into liquid by a condenser (not shown), and finally reserved in the second tank 9.

Next, the engine 3 will be explained as follows.

The engine 3 in the present embodiment is a compression ignition-type internal-combustion engine as explained before. Common fuel such as diesel oil, heavy oil, kerosene, biodiesel fuel, or dimethyl ether is reserved in a first tank 8, and fed to the engine 3 through a pump P1 and a valve V7. The output of the pump P1 and the opening of the valve V7 are controlled by the control device 7.

When the engine 3 constitutes the aforementioned structure for reserving an organic hydride, the engine 3 uses oxygen as oxidizing gas, and does not use air, unlike when the engine 3 constitutes the aforementioned structure for decomposing the organic hydride. The oxygen to be used by the engine 3 is fed from the water electrolysis device 4 through a valve V2 (or second valve) of which the opening is controlled by the control device 7. That is, the nitrogen constituting approximately 78% of the air and the other gases contained in the air except for oxygen are not fed to each combustion chamber of the engine 3. In addition, according to the present embodiment, the recirculated exhaust gas is introduced into each combustion chamber of the engine 3 to compensate for the remaining of the approximately 21 % oxygen. Note water vapor and carbon dioxide are main components of the recirculated exhaust gas.

The power conversion system S is configured such that the recirculated exhaust gas circulates through a branch pipe 13 which branches off from an appropriate position of an exhaust-gas flow path of the engine 3. A valve V4 (or fourth valve) and the heat exchanger 6 are arranged at midway positions in the branch pipe 13. The opening of the valve V4 is controlled by the control device 7, and the heat exchanger 6 lowers the temperature of the recirculated exhaust gas flowing through the branch pipe 13 by heat exchange. When the engine 3 constitutes the aforementioned structure for reserving an organic hydride, the recirculated exhaust gas is not cooled by the heat exchanger 6, unlike when the engine 3 constitutes the aforementioned structure for decomposing an organic hydride, so that the high-temperature exhaust gas from the engine 3 is to be returned to the engine 3 without being cooled.

In the above-mentioned engine 3, spontaneous ignition of injected fuel is caused by compression in the atmosphere of oxygen and the recirculated exhaust gas, whereby the injected fuel burns. After the burning, the exhaust gas is discharged from the engine 3 through the exhaust-gas flow path, which is predetermined. At that time, a part of the exhaust gas is fed to the reactor 1 or the hydrogen generator 2 through the aforementioned valve V10, while another part of the exhaust gas is recirculated through the aforementioned valve V4 for use as the recirculated exhaust gas. Further, the remaining part of the exhaust gas is discharged to the atmosphere.

The radiator 14 illustrated in FIG. 1 is arranged at a midway position of a flow path 15 for circulation of the engine-cooling water, and radiates the heat of the engine-cooling water to the atmosphere, where the engine-cooling water is transferred from the engine 3 side with having a high temperature.

In addition, when the engine 3 constitutes the aforementioned structure for reserving an organic hydride, the air is fed to the engine 3 through a valve V1 (or first valve) during warm-up operation which will be explained later. The air is not fed to the engine 3 after the warm-up operation is completed. Further, hydrogen is not fed to the engine 3 through a valve V3 (or third valve) in the structure for reserving an organic hydride.

Next, the aforementioned structure for decomposing the organic hydride by use of the hydrogen generator 2 (i.e., the energy regeneration structure) will be explained below.

In the hydrogen generator 2 in the present embodiment, flow paths allowing flow of the organic hydride fed to the hydrogen generator 2 are formed, and the catalyst is arranged to face the flow paths.

A structure similar to the structure used in the reactor 1 (illustrated in FIGS. 2A to 2C) can be used in the hydrogen generator 2 of the present embodiment. Herein, note the organic hydride (e.g., methylcyclohexane) reserved in the second tank 9 illustrated in FIG. 1 is fed into each reaction cell 31 through a pump P4 and a valve V11. The reaction cells 31 are arranged such that the high-temperature exhaust gas from the engine 3 flows through the gaps formed between the reaction cells 31 as in the reactor 1 described hereinbefore.

In the hydrogen generator 2 (illustrated in FIG. 1) according to the present embodiment, the temperature in the hydrogen generator 2 is assumed to be set at approximately 250°C to 450°C, and the pressure in the hydrogen generator 2 is assumed to be set at approximately 0.2 MPa or lower, based on the premise that methylcyclohexane is decomposed into hydrogen and toluene as explained before.

That is, even in the case where the reactor 1 (illustrated in FIG. 1) and the hydrogen generator 2 in the present embodiment use the same catalyst 37 (illustrated in FIG. 2C), the reactor 1 (illustrated in FIG. 1) and the hydrogen generator 2 in the present embodiment can respectively conduct the hydrogenation (that is, reaction of producing an organic hydride) of an aromatic hydrocarbon (or dehydrogenated product), and the hydrogen generation (that is, reaction of decomposing the organic hydride), by changing the respective temperatures and/or the respective pressures in the reactor 1 and the hydrogen generator 2.

However, the temperature and the pressure in the hydrogen generator 2 are not limited to the above values, and can be appropriately set within ranges corresponding to the organic hydride to be used.

As explained hereinbefore, the hydrogen generator 2 is heated by setting the flow path toward the direction B by the switching valve V12 so as to introduce the exhaust gas which flows from the engine 3 through the valve V10 into the hydrogen generator 2.

The opening of the valve V10 is controlled by the control device 7 which will be explained later, so that the flow rate of the exhaust gas into the hydrogen generator 2 is controlled and the temperature of the heated hydrogen generator 2 is set in the aforementioned range. The exhaust gas used in heating the hydrogen generator 2 passes through the hydrogen generator 2, and is thereinafter discharged to the outside of the power conversion system S (e.g., the atmosphere).

The power conversion system S according to the present embodiment has been explained as above, in which the reactor 1 and the hydrogen generator 2 are separately arranged. However, instead of the construction, the power conversion system S may be configured to have a single reaction/hydrogen generation device having both functions of the reactor 1 and the hydrogen generator 2.

The aforementioned second tank 9 is used in feeding of the organic hydride to the hydrogen generator 2. As explained before, the second tank 9 reserves the organic hydride, and feeds the organic hydride to the hydrogen generator 2 through the pump P4 and the valve V11. The output of the pump P4 and the opening of the valve V11 are controlled by the control device 7.

As explained before, the aforementioned structure for decomposing the organic hydride includes the separator 5, where the separator 5 at least separates hydrogen from the mixture of hydrogen and the aromatic hydrocarbon produced by decomposition of the organic hydride in the hydrogen generator 2.

Herein, note the wording of "at least" means that the separation performance is sufficient as long as hydrogen is separated from the mixture, and also that the separation performance is sufficient as long as hydrogen is separated from the mixture even when the mixture may contain a small amount of the organic hydride remaining undecomposed.

The mixture of hydrogen and the aromatic hydrocarbon, the mixture being discharged from the hydrogen generator 2, is gaseous. The separator 5 cools the mixture so as to lower the temperature of the mixture below the boiling point of the aromatic hydrocarbon and condense the aromatic hydrocarbon into liquid, and separates hydrogen gas from the liquid of the aromatic hydrocarbon.

The separator 5 is configured by, for example, a chamber and a cooling tube arranged in the chamber, where the mixture of hydrogen and the aromatic hydrocarbon is introduced into the chamber. The coolant flowing through the cooling tube may be, for example, gas such as air or liquid such as water. Further, the separator 5 may be configured to form heat radiation fins on the chamber, so that the heat radiation fins contact with the air.

The aromatic hydrocarbon (or dehydrogenated product) separated in the separator 5 is transferred by a pump (not shown) to the third tank 10 and is reserved in the third tank 10. The aromatic hydrocarbon separated as above may contain the organic hydride remaining undecomposed.

In addition, the hydrogen separated by the separator 5 is introduced into each combustion chamber of the engine 3 explained later through the valve V3 (or third valve), and used as a part of fuel.

The hydrogen, in addition to the aforementioned common fuel, is fed to the engine 3 when the engine 3 constitutes the structure for decomposing the one or more organic hydrides. The above hydrogen is supplied from the separator 5 through the (third) valve V3, the opening of which is controlled by the control device 7.

When the engine 3 includes the aforementioned structure for decomposing an organic hydride, the air instead of oxygen, is used as the oxidizing gas, unlike when the engine 3 includes the aforementioned structure for reserving the organic hydride. The air is introduced into the engine 3 through the valve V1 (or first valve) of which the opening is controlled by the control device 7.

Further, unlike the aforementioned structure for reserving the organic hydride, the recirculated exhaust gas fed to the engine 3 is cooled by heat exchange with the engine-cooling water in the heat exchanger 6. Specifically, a part of the cooling water discharged from the engine 3 is fed to the heat exchanger 6 through a branch path which branches off from a circulation path at the downstream side of the radiator 14. A valve V5 (or fifth valve) is arranged in the above branch path, and the opening of the valve V5 is controlled by the control device 7. Moreover, after the engine-cooling water passes through the heat exchanger 6, the engine-cooling water is returned to the circulation path at the downstream side of the radiator 14.

Accordingly, common fuel and hydrogen burn in the atmosphere consisting of air and the recirculated exhaust gas, when the engine 3 includes the aforementioned structure for reserving an organic hydride. Herein, the hydrogen is mixed with air in advance, and then is introduced into each combustion chamber. The common fuel from the first tank 8 is injected into the combustion chamber at the timings of combustion ignition. That is, when spontaneous ignition of the injected fuel occurs, the hydrogen in the combustion chamber is ignited to burn (that is, compression self-ignition diffusion combustion).

In addition, the feed rate of the hydrogen is set to approximately 0 to 40% of the feed rate of the common fuel, and the feed rate of the recirculated exhaust gas is set to approximately 0 to 50% of the feed rate to the engine 3.

After the burning, the exhaust gas is discharged from the engine 3 through the predetermined exhaust-gas flow path. At this time, a part of the exhaust gas is fed as a heat source to the hydrogen generator 2 through the aforementioned valves V10 and V12, and another part of the exhaust gas is used as the recirculated exhaust gas through the aforementioned valve V4 (or fourth valve). The remaining part of the exhaust gas is discharged to the atmosphere.

Next, the operations of the power conversion system S according to the present embodiment, together with a procedure executed by the control device 7 in the power conversion system S, will be explained below.

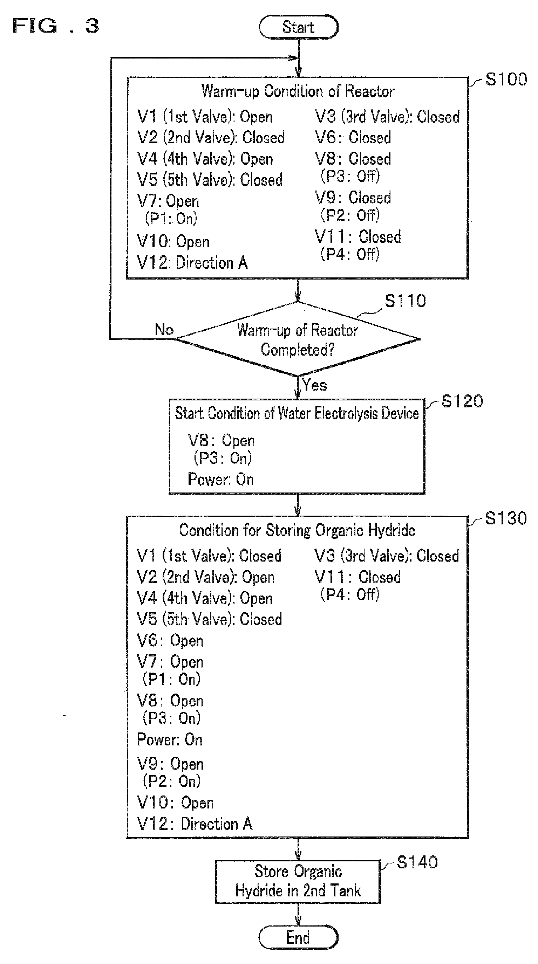

FIG. 3, which is herein referred to, is a flowchart for explaining the operations of the power conversion system S according to the present embodiment, and indicates a procedure executed by the control device when the power conversion system performs operations for storing the organic hydride.

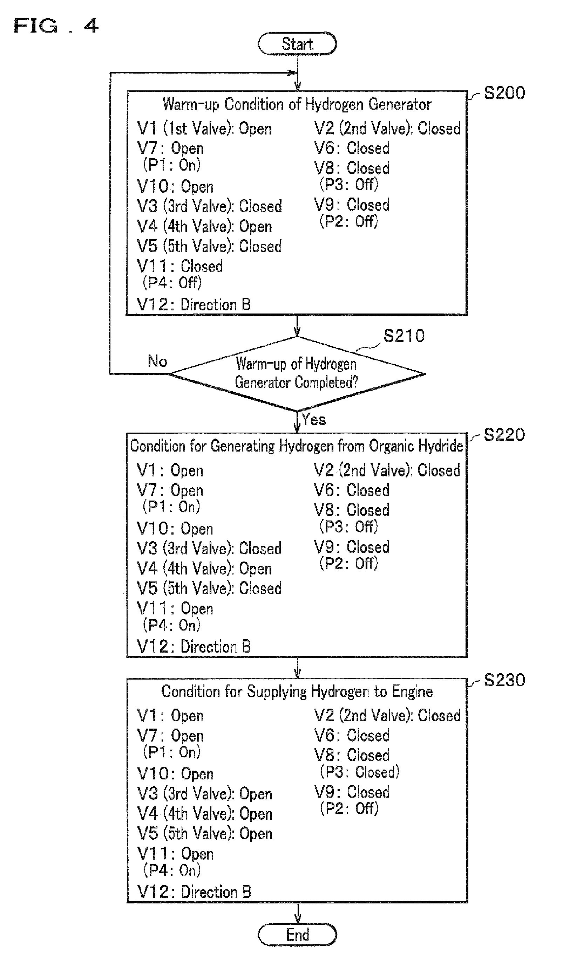

In addition, FIG. 4 is also a flowchart for explaining the operations of the power conversion system S according to the present embodiment, and indicates a procedure executed by the control device when the power conversion system uses the hydrogen obtained by decomposition of the organic hydride, as a part of fuel.

First, the procedure executed by the control device 7 when the power conversion system S performs operations for storing the organic hydride will be explained below.

When the engine 3 (illustrated in FIG. 1) is started with a start switch (not shown), or when the operation of the power conversion system S is switched from the state in which the organic hydride is decomposed to the state in which the organic hydride is stored, as indicated in FIG. 3, the control device 7 sets a warm-up condition of the reactor 1 (illustrated in FIG. 1). That is, the control device 7 executes step S100 to open the valve V1 (or first valve), the valve V4 (or fourth valve) and the valve V7, thereby to feed air, recirculated exhaust gas and fuel (that is, common fuel as described hereinbefore) to the engine 3.

Then, the engine 3 is driven by operating a starter motor (not shown), and the high-temperature exhaust gas from the engine 3 is introduced into the reactor 1 by setting the valve V12 toward the direction A and opening the valve V10. At this time, the control device 7 turns on the pump P1.

As a result, a temperature of the reactor 1 is gradually raised by the heat of the exhaust gas. At this time, the control device 7 stops the oxygen feed to the engine 3 by closing the valve V2 (or second valve). In addition, the control device 7 prohibits the engine-cooling water from being fed to the heat exchanger 6 by closing the valve V5 (or fifth valve), whereby the recirculated exhaust gas to be fed to the engine 3 is not cooled by the engine-cooling water.

Further, the control device 7 closes the valve V11 and the valve V3 (or third valve) used when the hydrogen obtained by decomposition of the organic hydride is fed to the engine 3, and turns off the pump P4.

Furthermore, until the warm-up operation of the reactor 1 is completed, the control device 7 closes the valve V6 (or sixth valve) and the valves V8 and V9, and turns off the pumps P3 and P2 so as to prohibit hydrogen and the aromatic hydrocarbon from being fed to the reactor 1. The timing for completing the warm-up operation can be set at the time when the temperature of the reactor 1 reaches a predetermined value, as explained below.

The control device 7 determines "whether or not the temperature of the reactor 1 reaches a predetermined value", for example, on the basis of whether or not the temperature of the reactor 1 reaches a predetermined value in the aforementioned range from approximately 150°C to 250°C. This determination is made on the basis of an output signal from a temperature sensor (not shown) arranged in the reactor 1. That is, in step S110, it is determined whether or not the warm-up operation of the reactor 1 is completed. When it is determined that the warm-up operation of the reactor 1 is not completed (i.e., "No" is determined in step S110), the operation goes back to step S100.

When it is determined that the warm-up operation of the reactor 1 is completed (i.e., "Yes" is determined in step S110), the control device 7 sets (in step S120) a starting condition for the water electrolysis device 4 (illustrated in FIG. 1). That is, the control device 7 opens the valve V8 and turns on the pump P3 so as to feed the water from a water tank 11 (illustrated in FIG. 1) to the water electrolysis device 4, and the control device 7 turns on the power supply 12 so as to supply electric power to the water electrolysis device 4. Thus, the water electrolysis device 4 performs water electrolysis to generate hydrogen and oxygen.

Then, the control device 7 sets a condition for reserving the organic hydride (in step S130).

That is, the valve V1 (or first valve) which has been opened is to be closed, and the valve V2 (or second valve) which has been closed is to be opened, whereby oxygen instead of air 4 is to be fed from the water electrolysis device to the engine 3.

At this time, the control device 7 controls the valve V1 (or first valve) and the valve V5 (or fifth valve) to be closed when the valve V2 (or second valve) is to be opened with at least a predetermined degree of opening. That is, when oxygen is fed to the engine 3 at a predetermined flow rate or more, air is prohibited from being fed to the engine 3, and the recirculated exhaust gas having a high temperature is directly fed to the engine 3. Accordingly, the combustion temperature of the fuel becomes high as explained later, allowing the generation of soot to be prevented. In addition, nitrogen included in air does not exist when the fuel burns at a high temperature, allowing the generation of NOₓ to be reduced.

Further, the valve V6 (or sixth valve) which has been closed is to be opened, whereby the hydrogen is fed from the water electrolysis device 4 to the reactor 1. In addition, the valve V9 which has been closed is to be opened, and the pump P2 is to be turned on, allowing the aromatic hydrocarbon (or dehydrogenated product) reserved in the third tank 10 (illustrated in FIG. 1) to be fed to the reactor 1. Thus, in the reactor 1, the organic hydride is produced by the reaction between hydrogen and the aromatic hydrocarbon, and then the produced organic hydride is reserved (in step S140) in the second tank 9 (illustrated in FIG. 1). Note the combustion regions on the engine 3 during the operation of storing the organic hydride will be explained in detail hereinafter.

Next, the procedure executed by the control device 7 in the case that the power conversion system S includes a decomposition structure using hydrogen as a part of fuel obtained by decomposition of the organic hydride will be explained below.

When the engine 3 (illustrated in FIG. 1) is started with a start switch (not shown), or when the operation of the power conversion system S is switched from the state storing the organic hydride to the state decomposing the organic hydride, as indicated in FIG. 4, the control device 7 (illustrated in FIG. 1) sets (in step S200) a warm-up condition of the hydrogen generator 2 (illustrated in FIG. 1). That is, the control device 7 opens the valve V1 (or first valve), the valve V4 (or fourth valve) and the valve V7, thereby to feed air, recirculated exhaust gas, and fuel (or common fuel described hereinbefore) to the engine 3.

Then, the engine 3 is driven by operating the starter motor (not shown), and then the high-temperature exhaust gas is introduced from the engine 3 into the hydrogen generator 2 by setting the valve V12 toward the direction B and opening the valve V10. At this time, the control device 7 turns on the pump P1.

As a result, a temperature of the hydrogen generator 2 is gradually raised by the heat of the exhaust gas. At this time, the control device 7 stops the oxygen feed to the engine 3 by closing the valve V2 (or second valve). In addition, the control device 7 prohibits the engine-cooling water from being fed to the heat exchanger 6 by closing the valve V5 (or fifth valve).

Further, until the warm-up operation of the hydrogen generator 2 is completed, the control device 7 keeps closing the valve V11 and turns off the pump P4 so as to prohibit the organic hydride from being fed to the hydrogen generator 2. In addition, the control device 7 closes the valves V6 (or sixth valve), V8 and V9, and turns off the pumps P2 and P3 so as to prohibit hydrogen and the aromatic hydrocarbon from being fed to the reactor 1.

Furthermore, the control device 7 determines whether or not the temperature of the hydrogen generator 2 reaches a predetermined value (e.g., a predetermined temperature in the aforementioned range from approximately 250°C to 450°C), on the basis of an output signal from a temperature sensor (not shown) arranged in the hydrogen generator 2. That is, it is determined whether or not the warm-up operation of the hydrogen generator 2 is completed (in step S210). When it is determined that the warm-up operation of the hydrogen generator 2 is not completed (i.e., "No" is determined in step S210), the operation goes back to step S200.

Alternatively, when it is determined that the warm-up operation of the hydrogen generator 2 is completed (i.e., "Yes" is determined in step S210), the control device 7 sets (in step S220) a condition for generating hydrogen from the organic hydride. That is, the control device 7 opens the valve V11 which has been closed, and turns on the pump P4. Thus, the organic hydride reserved in the third tank 10 is to be fed to the hydrogen generator 2, and subsequently decomposed in the hydrogen generator 2 into hydrogen and the aromatic hydrocarbons. Then, the mixture of hydrogen and the aromatic hydrocarbon is fed to the separator 5, whereby the mixture is separated into hydrogen and the aromatic hydrocarbon in the separator 5. Accordingly, the aromatic hydrocarbon (or dehydrogenated product) is fed to the third tank 10 and reserved therein.

Next, the control device 7 sets a condition for feeding hydrogen to the engine 3 (in step S230). That is, the control device 7 feeds the hydrogen separated in the separator 5, as a part of fuel, to the engine 3 by opening the valve V3 (or third valve) which has been closed. In addition, the control device 7 introduces the engine-cooling water to the heat exchanger 6 by opening the valve V5 (or fifth valve) which has been closed. Thus, the cooled recirculated exhaust gas is fed to the engine 3. Further, the condition for feeding hydrogen to the engine 3 is set as described above, resulting in completion of the procedure for decomposing the organic hydride executed by the control device 7.

Next, the effects of the power conversion system S according to the present embodiment will be explained below.

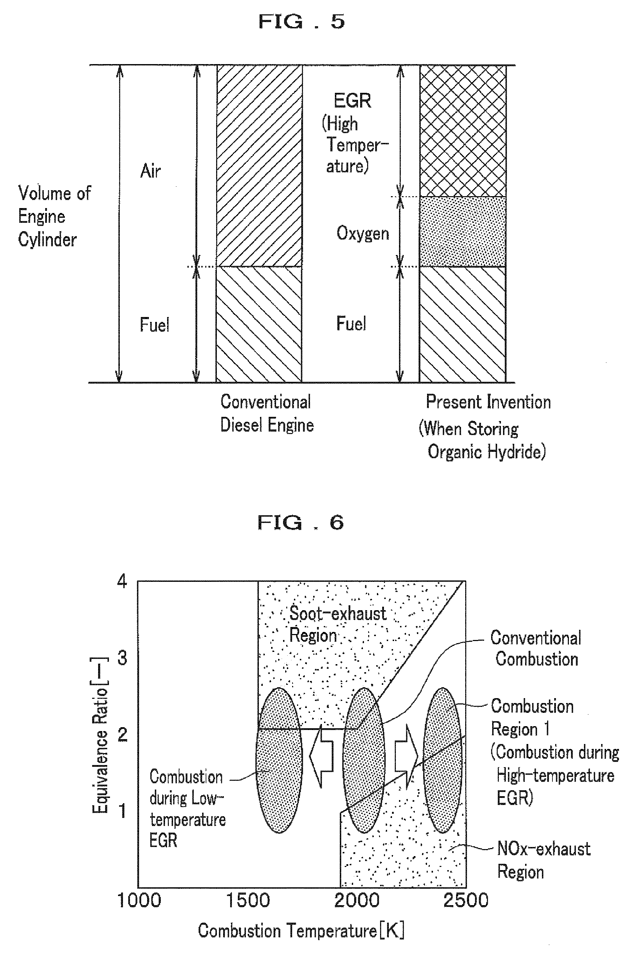

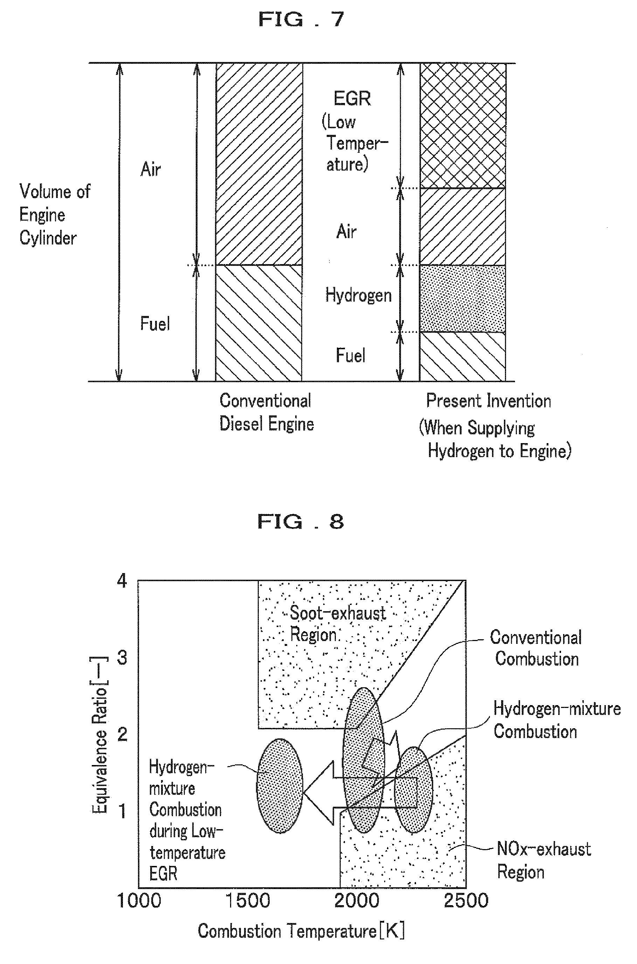

FIG. 5 is a graphic diagram indicating a gas composition rate in a cylinder of the engine when oxygen is fed to the cylinder during the operation of the power conversion system storing the organic hydride. FIG. 6 is a graphic diagram illustrating combustion regions of the power conversion system according to the present embodiment during the operation of the power conversion system storing the organic hydride, in comparison with a combustion region of the conventional diesel engine. FIG. 7 is a graphic diagram indicating a gas composition in a cylinder of the engine when hydrogen is fed to the cylinder during the operation of the power conversion system using hydrogen as a part of fuel obtained by decomposition of the organic hydride. FIG. 8 is a graphic diagram illustrating combustion regions of the power conversion system according to the present embodiment during the operation of the power conversion system using the hydrogen as a part of fuel obtained by decomposition of the organic hydride, in comparison with a combustion region of the conventional diesel engine. The vertical axes in FIGS. 6 and 8 correspond to the equivalence ratio, and the horizontal axes correspond to the combustion temperature [K].

Since air is used as oxidizing gas in the conventional diesel engine, gas composition rate in a cylinder of the engine 3 is represented by a volume ratio between air and fuel in the cylinder of the engine 3 as illustrated in FIG. 5.

In contrast, in the engine 3 of the power conversion system S according to the present embodiment (indicated by "Present Invention" in FIG. 5), air is not fed, while oxygen and recirculated exhaust gas (or high-temperature EGR gas) are fed to the engine 3 during the operation of storing the organic hydride. Accordingly, nitrogen does not exist in the cylinder of the engine 3, allowing the combustion exhausting NOx to be realized even when the fuel burns at a high temperature.

However, if oxygen is not fed to the engine 3 as corresponding to a volume of nitrogen fed in the conventional diesel engine, a pumping loss during the intake stroke of each piston of the engine 3 increases, resulting in decrease in the heating efficiency.

On the other hand, in the engine 3 according to the present embodiment, the high-temperature recirculated exhaust gas (EGR gas) is fed instead of nitrogen to the engine 3. This allows the pumping loss during the intake stroke of each piston to be prevented from increasing.

In addition, as illustrated in FIG. 6, in the combustion region of the conventional diesel engine (which is indicated by "Conventional Combustion" in FIG. 6), both soot and NOₓ are exhausted at the same time. In contrast, according to the present embodiment, oxygen and the recirculated exhaust gas with a high temperature are fed instead of air to the engine 3 as explained before. This allows the combustion region to shift toward the high-temperature side from the conventional combustion region, so as to get rid of the region in which soot is generated.

Further, when the combustion temperature rises as the conventional combustion shifts to the combustion region 1, the combustion region 1 is to overlap the NOₓ-exhaust region. However, in the engine 3 according to the present embodiment, NOₓ is not exhausted since air is not fed as the oxidizing gas to the engine 3 during the operation of storing the organic hydride.

Thus, in the engine 3 according to the present embodiment, generation of both soot and NOₓ can be reduced.

Meanwhile, if EGR gas with a low temperature is fed to the engine, the combustion temperature becomes lower than the temperature of the conventional combustion region as illustrated in FIG. 6, resulting in increase in soot exhaust. Therefore, high-temperature EGR gas is fed to the engine during the operation of storing energy in the power conversion system according to the present embodiment. This allows combustion generating neither of NOₓ and soot to be realized.

Moreover, in the engine 3 according to the present embodiment, it is possible to make the oxygen feed rate to each cylinder greater than that of the conventional combustion. Therefore, it is possible to increase the maximum torque, decrease the mechanical loss, and increase the degree of constant volume. Thus, the heating efficiency of the engine 3 can be improved.

Besides, as illustrated in FIG. 7, during the decomposition of the organic hydride, i.e., during hydrogen feed to the engine 3, the hydrogen and the conventional fuel are fed to the engine 3, and low-temperature recirculated exhaust gas and air are also fed to the engine 3.
In addition, the mixture of hydrogen and the fuel are combusted (or hydrogen-mixture combustion), allowing the mixture of the fuel, air and the recirculated exhaust gas (EGR gas) to be homogenized. Accordingly, it is possible to get rid of the region in which soot is generated, as illustrated in FIG. 8.

Here, note that NOₓ usually increases as the combustion temperature rises. However, in the present embodiment, recirculated exhaust gas with a low temperature (or low-temperature EGR) cooled by the heat exchanger 6 is fed to the engine 3. Therefore, as indicated by the region of "Hydrogen-mixture Combustion during Low-temperature EGR" in FIG. 8, it is possible to get rid of the NOₓ-exhaust region in the present embodiment.

Thus, even in the operation of the engine 3 while the organic hydride is decomposed, it is possible to reduce both soot and NOₓ.

In the power conversion system S according to the present embodiment explained hereinbefore, it is possible to reserve and use hydrogen (i.e., reserve and regenerate energy) by use of the organic hydride at low operational costs. In addition, it is possible to realize a low environmental load via decrease in both soot and NOₓ.

The present invention is not limited to the above embodiments, and various modifications thereof can be carried out.

In the embodiments described hereinbefore, oxygen generated by the water electrolysis device 4 is fed to the engine 3 (or compression ignition-type internal-combustion engine) through the valve V2 (or second valve). However, the "oxygen fed to the engine 3 through the valve V2 (or second valve)" in the present invention is not limited to the oxygen generated by the water electrolysis device 4, and may be oxygen-enriched gas which does not contain nitrogen. This oxygen-enriched gas contains oxygen preferably in 92 vol. % or more, more preferably in 95 vol. % or more, and most preferably in 99 vol. % or more. The component of the oxygen-enriched gas other than oxygen can be inert gas other than nitrogen, water vapor, and the like.

### List of References

1: Reactor
2: Hydrogen Generator (or Decomposer)
3: Diesel Engine
4: Water Electrolysis Device
5: Separator
6: Heat Exchanger
7: Control Device
8: First Tank
9: Second Tank
10: Third Tank
11: Water Tank
12: Power Supply
13: Branch Pipe
14: Radiator
V1: Valve (or First Valve)
V2: Valve (or Second Valve)
V3: Valve (or Third Valve)
V4: Valve (or Fourth Valve)
V5: Valve (or Fifth Valve)
V6: Valve (or Sixth Valve)
V7: Valve
V8: Valve
V9: Valve
V10: Valve
V11: Valve
V12: Valve
P1: Pump
P2: Pump
P3: Pump
P4: Pump
S: Power Conversion System

## Claims

1. A power conversion system (S) comprising:
a reactor (1) in which hydrogen and an aromatic hydrocarbon are chemically bound under a heating condition;
a decomposer (2) decomposing a product prepared via chemical binding between the hydrogen and the aromatic hydrocarbon into hydrogen and the aromatic hydrocarbon again under a heating condition; and
a compression ignition-type internal-combustion engine (3) feeding exhaust gas as a heat source to the reactor (1) and the decomposer (2) when the reactor (1) and the decomposer (2) are heated, **characterised in that**
the compression ignition-type internal-combustion engine (3) includes:
a first valve (V1) arranged in a flow path for feeding air;
a second valve (V2) arranged in a flow path for feeding oxygen;
a third valve (V3) arranged in a flow path for feeding hydrogen;
a fourth valve (V4) arranged in a flow path for feeding recirculated exhaust gas;
and
a fifth valve (V5) arranged in a flow path for feeding coolant which cools the recirculated exhaust gas fed to the compression ignition-type internal-combustion engine (3), by heat exchange between the coolant and the recirculated exhaust gas.

2. The power conversion system (S) according to claim 1, further comprising a water electrolysis device (4) which decomposes water into oxygen and hydrogen, wherein
the hydrogen generated by the water electrolysis device (4) is fed to the reactor (1) through a flow path provided with a sixth valve (V6), and
the oxygen fed to the compression ignition-type internal-combustion engine (3) through the flow path having the second valve (V2) is generated by the water electrolysis device (4).

3. The power conversion system (S) according to claim 1, further comprising a control device (7), wherein
when hydrogen and the aromatic hydrocarbon are chemically bound under a heating condition in the reactor (1), the control device (7) performs the steps of:
closing the first valve (V1) and the third valve (V3) to prohibit air and hydrogen from being fed to the compression ignition-type internal-combustion engine (3);
opening the second valve (V2) and the fourth valve (V4) to feed oxygen and the recirculated exhaust gas to the compression ignition-type internal-combustion engine (3); and 0195-73423EP-CM/Kf
closing the fifth valve (V5) to prohibit the recirculated exhaust gas from being cooled by the coolant.

4. The power conversion system (S) according to claim 2, further comprising a control device (7), wherein
when hydrogen and the aromatic hydrocarbon are chemically bound under a heating condition in the reactor (1), the control device (7) performs the steps of:
closing the first valve (V1) and the third valve (V3) to prohibit air and hydrogen from being fed to the compression ignition-type internal-combustion engine (3);
opening the second valve (V2) and the fourth valve (V4) to feed oxygen and the recirculated exhaust gas to the compression ignition-type internal-combustion engine (3); and
closing the fifth valve (V5) to prohibit the recirculated exhaust gas from being cooled by the coolant.

5. The power conversion system (S) according to claim 3, wherein when the second valve (V2) is opened with at least a predetermined degree of opening, the control device (7) controls the first valve (V1) and the fifth valve (V5) to be closed.

6. The power conversion system (S) according to claim 4, wherein when the second valve (V2) is opened with at least a predetermined degree of opening, the control device (7) controls the first valve (V1) and the fifth valve (V5) to be closed.

7. The power conversion system (S) according to claim 1, further comprising a control device (7), wherein
the compression ignition-type internal-combustion engine (3) and the decomposer (2) are connected through the flow path for hydrogen in which the third valve (V3) is arranged, and
when the product prepared via chemical binding between the hydrogen and the aromatic hydrocarbon is decomposed into the hydrogen and the aromatic hydrocarbon again, the control device (7) performs the steps of:
closing the second valve (V2) to prohibit oxygen from being fed to the compression ignition-type internal-combustion engine (3);
opening the third valve (V3) to feed the hydrogen from the decomposer (2) as a part of fuel to the compression ignition-type internal-combustion engine (3);
opening the first valve (V1) and the fourth valve (V4) to feed air and the recirculated exhaust gas to the compression ignition-type internal-combustion engine (3); and
opening the fifth valve (V5) to cool the recirculated exhaust gas fed to the compression ignition-type internal-combustion engine (3) by the coolant.

8. The power conversion system (S) according to claim 2, further comprising a control device (7), wherein
the compression ignition-type internal-combustion engine (3) and the decomposer (2) are connected through the flow path for hydrogen in which the third valve (V3) is arranged, and
when the product prepared via chemical binding between the hydrogen and the aromatic hydrocarbon is decomposed into the hydrogen and the aromatic hydrocarbon again, the control device (7) performs the steps of:
closing the second valve (V2) to prohibit oxygen from being fed to the compression ignition-type internal-combustion engine (3);
opening the third valve (V3) to feed the hydrogen from the decomposer (2) as a part of fuel to the compression ignition-type internal-combustion engine (3);
opening the first valve (V1) and the fourth valve (V4) to feed air and the recirculated exhaust gas to the compression ignition-type internal-combustion engine (3); and
opening the fifth valve (V5) to cool the recirculated exhaust gas fed to the compression ignition-type internal-combustion engine (3) by the coolant.

## Patentansprüche

1. Leistungswandlersystem (S) mit:
einem Reaktor (1), in dem Wasserstoff und ein aromatischer Kohlenwasserstoff durch Aufheizen chemisch gebunden werden;
einem Zerleger (2), der ein Produkt zerlegt, welches durch eine chemische Bindung zwischen dem Wasserstoff und dem aromatischen Kohlenwasserstoff hergestellt wurde in Wasserstoff und den aromatischen Kohlenwasserstoff, wiederum durch Aufheizen; und
einem Kompressionszündungsverbrennungsmotor (3), der Abgas als eine Wärmequelle dem Reaktor (1) und dem Zerleger (2) zuführt, wenn der Reaktor (1) und der Zerleger (2) aufgeheizt werden, **dadurch gekennzeichnet, dass**
der Kompressionszündungsverbrennungsmotor (3) aufweist:
ein erstes Ventil (V1), welches um einen Luftzufuhrströmungsweg angeordnet ist;
ein zweites Ventil (V2), welches in einem Sauerstoffzufuhrströmungsweg angeordnet ist;
ein drittes Ventil (V3), welches in einem Wasserstoffzufuhrströmungsweg angeordnet ist;
ein viertes Ventil (V4), welches in einem Strömungsweg
für die Zufuhr rezirkulierten Abgases angeordnet ist;
und
ein fünftes Ventil (V5), welches in einem Strömungsweg für die Zufuhr eines Kühlmittels angeordnet ist, welches das rezirkulierte Abgas kühlt, welches dem Kompressionszündungsverbrennungsmotor (3) zugeführt wurde, durch einen Wärmetausch zwischen dem Kühlmittel und dem rezirkulierten Abgas.

2. Leistungswandlersystem (S) nach Anspruch 1, welches ferner eine Wasserelektrolysevorrichtung (4) aufweist, die Wasser in Sauerstoff und Wasserstoff zerlegt, wobei
der von der Wasserektrolysevorrichtung (4) erzeugte Wasserstoff dem Reaktor (1) über einen Strömungsweg zugeführt wird, der mit einem sechsten Ventil (V6) versehen ist, und
der Sauerstoff, der dem Kompressionszündungsverbrennungsmotor (3) durch den Strömungsweg, welcher das zweite Ventil (V2) beinhaltet zugeführt wurde, von der Wassereletrolysevorrichtung (4) erzeugt wurde.

3. Leistungswandlersystem (S) nach Anspruch 1, welches ferner eine Steuerungsvorrichtung (7) aufweist, wobei
wenn Wasserstoff und der aromatische Kohlenwasserstoff in dem Reaktor (1) durch Aufheizen chemisch gebunden werden, die Steuervorrichtung (7) folgende Schritte ausführt:
Schließen des ersten Ventils (V1) und des dritten Ventils (V3), um zu verhindern, dass Luft und Wasserstoff dem Kompressionszündungsverbrennungsmotor (3) zugeführt werden,
Öffnen des zweiten Ventils (V2) und des vierten Ventils (V4), um Sauerstoff und das rezirkulierte Abgas dem Kompressionszündungsverbrennungsmotor (3) zuzuführen, und
Schließen des fünften Ventils (V5) um zu verhindern, dass das rezirkulierte Abgas durch das Kühlmittel gekühlt wird.

4. Leistungswandlersystem (S) nach Anspruch 2, welches ferner eine Steuerungsvorrichtung (7) aufweist, wobei
wenn Wasserstoff und der aromatische Kohlenwasserstoff in dem Reaktor (1) durch Aufheizen chemisch gebunden werden, die Steuervorrichtung (7) folgende Schritte ausführt:
Schließen des ersten Ventils (V1) und des dritten Ventils (V3), um zu verhindern, dass Luft und Wasserstoff dem Kompressionszündungsverbrennungsmotor (3) zugeführt werden,
Öffnen des zweiten Ventils (V2) und des vierten Ventils (V4), um Sauerstoff und das rezirkulierte Abgas dem Kompressionszündungsverbrennungsmotor (3) zuzuführen, und
Schließen des fünften Ventils (V5) um zu verhindern, dass das rezirkulierte Abgas durch das Kühlmittel gekühlt wird.

5. Leistungswandlersystem (S) nach Anspruch 3, wobei wenn das zweite Ventil (V2) mit mindestens einem vorbestimmten Öffnungsgrad geöffnet wird, die Steuerungsvorrichtung (7) das erste Ventil (V1) und das fünfte Ventil (V5) so steuert, dass diese geschlossen sind.

6. Leistungswandlersystem (S) nach Anspruch 4, wobei wenn das zweite Ventil (V2) mit mindestens einem vorbestimmten Öffnungsgrad geöffnet wird, die Steuerungsvorrichtung (7) das erste Ventil (V1) und das fünfte Ventil (V5) so steuert, dass diese geschlossen sind.

7. Leistungswandlersystem (S) nach Anspruch 1, welches ferner eine Steuerungsvorrichtung (7) aufweist, wobei
der Kompressionszündungsverbrennungsmotor (3) und der Zerleger (2) über den Strömungsweg für Wasserstoff, in dem das dritte Ventil (V3) angeordnet ist miteinander verbunden sind, und
wenn das über chemische Bindung zwischen dem Wasserstoff und dem aromatischen Kohlenwasserstoff hergestellte Produkt wieder in Wasserstoff und den aromatischen Kohlenwasserstoff zerlegt wird, die Steuerungsvorrichtung (7) folgende Schritte ausführt:
Schließen des zweiten Ventils (V2), um zu verhindern, dass Sauerstoff dem Kompressionszündungsverbrennungsmotor (3) zugeführt wird,
Öffnen des dritten Ventils (V3), um den Wasserstoff von dem Zerleger (2) als einen Teil des Treibstoffs dem Kompressionszündungsverbrennungsmotor (3) zuzuführen,
Öffnen des ersten Ventils (V1) und des vierten Ventils (V4), um Luft und das rezirkulierte Abgas dem Kompressionszündungsverbrennungsmotor (3) zuzuführen, und
Öffnen des fünften Ventils (V5), um das rezirkulierte Abgas, welches dem Kompressionszündungsverbrennungsmotor (3) zugeführt wird durch das Kühlmittel zu kühlen.

8. Leistungswandlersystem (S) nach Anspruch 2, welches ferner eine Steuerungsvorrichtung (7) aufweist, wobei
der Kompressionszündungsverbrennungsmotor (3) und der Zerleger (2) durch den Strömungsweg für Wasserstoff miteinander verbunden sind, in dem das dritte Ventil (V3) angeordnet ist und,
wenn das durch chemische Bindung zwischen dem Wasserstoff und dem aromatischen Kohlenwasserstoff erzeugte Produkt wieder in Wasserstoff und den aromatischen Kohlenwasserstoff zerlegt wird, die Steuerungsvorrichtung (7) folgende Schritte ausführt:
Schließen des zweiten Ventils (V2), um zu verhindern, dass Sauerstoff dem Kompressionszündungsverbrennungsmotor (3) zugeführt wird,
Öffnen des dritten Ventils (V3), um Wasserstoff von dem Zerleger (2) als einen Teil des Treibstoffs dem Kompressionszündungsverbrennungsmotor (3) zuzuführen,
Öffnen des ersten Ventils (V1) und des vierten Ventils (V4), um Luft und das rezirkulierte Abgas dem Kompressionszündungsverbrennungsmotor (3) zuzuführen, und
Öffnen des fünften Ventils (V5), um das dem Kompressionszündungsverbrennungsmotor (3) zugeführte rezirkulierte Abgas durch das Kühlmittel zu kühlen.

## Revendications

1. Système de conversion de puissance (S) comprenant :
un réacteur (1) dans lequel de l'hydrogène et un hydrocarbure aromatique sont liés chimiquement dans une condition de chauffage ;
un décomposeur (2) décomposant un produit préparé par l'intermédiaire de la liaison chimique entre l'hydrogène et l'hydrocarbure aromatique en hydrogène et l'hydrocarbure aromatique à nouveau dans une condition de chauffage ; et
un moteur à combustion interne du type à allumage par compression (3) alimentant un gaz d'échappement en tant que source de chaleur dans le réacteur (1) et le décomposeur (2) lorsque le réacteur (1) et le décomposeur (2) sont chauffés, **caractérisé en ce que**
le moteur à combustion interne du type à allumage par compression (3) comprend :
une première vanne (V1) disposée dans un chemin d'écoulement pour l'alimentation en air ;
une deuxième vanne (V2) disposée dans un chemin d'écoulement pour l'alimentation en oxygène ;
une troisième vanne (V3) disposée dans un chemin d'écoulement pour l'alimentation en hydrogène ;
une quatrième vanne (V4) disposée dans un chemin d'écoulement pour l'alimentation en gaz d'échappement recyclé ; et
une cinquième vanne (V5) disposée dans un chemin d'écoulement pour l'alimentation en liquide de refroidissement qui refroidit le gaz d'échappement recyclé alimenté vers le moteur à combustion interne du type à allumage par compression (3), par échange de chaleur entre le liquide de refroidissement et le gaz d'échappement recyclé.

2. Système de conversion de puissance (S) selon la revendication 1, comprenant en outre un dispositif d'électrolyse d'eau (4) qui décompose l'eau en oxygène et hydrogène, dans lequel
l'hydrogène généré par le dispositif d'électrolyse d'eau (4) est alimenté vers le réacteur (1) par un chemin d'écoulement muni d'une sixième vanne (V6), et
l'oxygène alimenté vers le moteur à combustion interne du type à allumage par compression (3) par le chemin d'écoulement ayant la deuxième vanne (V2) est généré par le dispositif d'électrolyse d'eau (4).

3. Système de conversion de puissance (S) selon la revendication 1, comprenant en outre un dispositif de commande (7), dans lequel
lorsque l'hydrogène et l'hydrocarbure aromatique sont liés chimiquement dans une condition de chauffage dans le réacteur (1), le dispositif de commande (7) réalise les étapes de :
fermeture de la première vanne (V1) et la troisième vanne (V3) pour empêcher l'air et l'hydrogène d'être alimentés vers le moteur à combustion interne du type à allumage par compression (3) ;
ouverture de la deuxième vanne (V2) et la quatrième vanne (V4) pour alimenter l'oxygène et le gaz d'échappement recyclé vers le moteur à combustion interne du type à allumage par compression (3) ; et
fermeture de la cinquième vanne (V5) pour empêcher le gaz d'échappement recyclé d'être refroidi par le liquide de refroidissement.

4. Système de conversion de puissance (S) selon la revendication 2, comprenant en outre un dispositif de commande (7), dans lequel
lorsque l'hydrogène et l'hydrocarbure aromatique sont liés chimiquement dans une condition de chauffage dans le réacteur (1), le dispositif de commande (7) réalise les étapes de :
fermeture de la première vanne (V1) et la troisième vanne (V3) pour empêcher l'air et l'hydrogène d'être alimentés vers le moteur à combustion interne du type à allumage par compression (3) ;
ouverture de la deuxième vanne (V2) et la quatrième vanne (V4) pour alimenter l'oxygène et le gaz d'échappement recyclé vers le moteur à combustion interne du type à allumage par compression (3) ; et
fermeture de la cinquième vanne (V5) pour empêcher le gaz d'échappement recyclé d'être refroidi par le liquide de refroidissement.

5. Système de conversion de puissance (S) selon la revendication 3, dans lequel lorsque la deuxième vanne (V2) est ouverte avec au moins un degré prédéterminé d'ouverture, le dispositif de commande (7) commande la fermeture de la première vanne (V1) et la cinquième vanne (V5).

6. Système de conversion de puissance (S) selon la revendication 4, dans lequel lorsque la deuxième vanne (V2) est ouverte avec au moins un degré prédéterminé d'ouverture, le dispositif de commande (7) commande la fermeture de la première vanne (V1) et la cinquième vanne (V5).

7. Système de conversion de puissance (S) selon la revendication 1, comprenant en outre un dispositif de commande (7), dans lequel
le moteur à combustion interne du type à allumage par compression (3) et le décomposeur (2) sont reliés par le chemin d'écoulement pour l'hydrogène dans lequel la troisième vanne (V3) est disposée, et
lorsque le produit préparé par l'intermédiaire de la liaison chimique entre l'hydrogène et l'hydrocarbure aromatique est décomposé en hydrogène et l'hydrocarbure aromatique à nouveau, le dispositif de commande (7) réalise les étapes de :
fermeture de la deuxième vanne (V2) pour empêcher l'oxygène d'être alimenté vers le moteur à combustion interne du type à allumage par compression (3) ;
ouverture de la troisième vanne (V3) pour alimenter l'hydrogène à partir du décomposeur (2) comme partie du carburant vers le moteur à combustion interne du type à allumage par compression (3) ;
ouverture de la première vanne (VI) et la quatrième vanne (V4) pour alimenter l'air et le gaz d'échappement recyclé vers le moteur à combustion interne du type à allumage par compression (3) ; et
ouverture de la cinquième vanne (V5) pour refroidir le gaz d'échappement recyclé alimenté vers le moteur à combustion interne du type à allumage par compression (3) par le liquide de refroidissement.

8. Système de conversion de puissance (S) selon la revendication 2, comprenant en outre un dispositif de commande (7), dans lequel
le moteur à combustion interne du type à allumage par compression (3) et le décomposeur (2) sont reliés par le chemin d'écoulement pour l'hydrogène dans lequel la troisième vanne (V3) est disposée, et
lorsque le produit préparé par l'intermédiaire de la liaison chimique entre l'hydrogène et l'hydrocarbure aromatique est décomposée en hydrogène et l'hydrocarbure aromatique à nouveau, le dispositif de commande (7) réalise les étapes de :
fermeture de la deuxième vanne (V2) pour empêcher l'oxygène d'être alimenté vers le moteur à combustion interne du type à allumage par compression (3) ;
ouverture de la troisième vanne (V3) pour alimenter l'hydrogène à partir du décomposeur (2) comme partie du carburant vers le moteur à combustion interne du type à allumage par compression (3) ;
ouverture de la première vanne (V1) et la quatrième vanne (V4) pour alimenter l'air et le gaz d'échappement recyclé vers le moteur à combustion interne du type à allumage par compression (3) ; et
ouverture de la cinquième vanne (V5) pour refroidir le gaz d'échappement recyclé alimenté vers le moteur à combustion interne du type à allumage par compression (3) par le liquide de refroidissement.
